# EUROPEAN PATENT SPECIFICATION

(11) **EP 4 449 677 B1**
(45) Date of publication and mention of the grant of the patent: **28.10.2026**
(21) Application number: 22704763.6
(22) Date of filing: 09.02.2022
(51) Int. Cl.: H04L 12/14, H04M 15/00, H04W 4/24

(54) **CHARGING APPLICATION SERVICE PROVIDERS COUPLED TO WIRELESS COMMUNICATIONS NETWORKS**
VERGEBÜHRUNG VON AN DRAHTLOSE KOMMUNIKATIONSNETZE GEKOPPELTEN ANWENDUNGSDIENSTANBIETERN
FACTURATION DE FOURNISSEURS DE SERVICES D'APPLICATION COUPLÉS À DES RÉSEAUX DE COMMUNICATION SANS FIL

(30) Priority: 15.12.2021 GR 20210100885
(43) Date of publication of application: 23.10.2024
(73) Proprietor: Lenovo (Singapore) Pte. Ltd., Singapore 556741 (SG)
(72) Inventor: PATEROMICHELAKIS, Emmanouil, 82110 Germering (DE); VAISHNAVI, Ishan, 81927 Munich (DE)
(74) Representative: Openshaw & Co.
(86) International application number: PCT/EP2022/053172
(87) International publication number: WO 2023/110162

(56) References cited:
- WO-A1-2020/156663
- WO-A1-2021/028063
- CHINA MOBILE: "Update description of Charging Enablement Function", vol. SA WG5, no. e-meeting; 20201012 - 20201021, 2 December 2020 (2020-12-02), XP051964303, Retrieved from the Internet <URL:https://ftp.3gpp.org/tsg_sa/TSG_SA/TSGs_90E_Electronic/Docs/SP-201043.zip 28201_CR0004_5GS_NSPACH_(Rel-16)_S5-205040 Rel-16 CR 28.201 Update description of Charging Enablement Function.docx> [retrieved on 20201202]

## Description

### Field

The subject matter disclosed herein relates generally to the field of charging an application service provider, such as a vertical service provider, coupled to a wireless communications network. This document defines a configuration function for charging an application service provider coupled to a wireless communications network, and a method performed by a configuration function for charging an application service provider coupled to a wireless communications network.

### Background

A technology enabler for efficiently integrating the IT and ICT sectors in 5G and beyond, is the use of a middleware layer which supports the MNO-provided API exposure and for providing support services to abstract/simplify the MNO services to make the use of a MNO domain attractive for application service providers, vertical customers, and application developers. Such middleware can be an edge and/or cloud platform, or a module deployed at the edge or cloud in vertical premises or in the MNO domain or third-party provider (e.g., edge cloud provider).

WO 2020/156663 A1 relates to adapting a network function and/or a management function based on exposure information that relates to properties of mobile communication.

Further background information can be found in the following 3GPP documents referenced herein. Network slicing is a 5G feature defined in TS 23.501 v17.2.0, TS 38.300 v16.7.0, and TS 28.530 v17.0.0. Slice capability exposure to verticals is defined in TS 23.434 v17.3.0 and 3GPP TR 23.700-99 v0.4.0. UE charging is explained in TR 32.847 v1.0.0. Charging for managing the Network Slice instances is specified in TS 28.202 v16.1.0. A Charging Trigger Function (CTF) is specified in TS 32.240 v17.3.0. A Charging Enablement Function (CEF) is defined in TS 28.201 v16.1.0. An MnS producer is defined in TS 28.533 v17.0.0. The MnS producer referred to here is the producer of provisioning MnS. Details on the interfaces and functions for a provisioning service (MnS) and for a network slice exposed by the MnS Producer can be found in TS 32.240 v17.3.0. Ga and Bns are defined in TS 28.202 v16.1.0. Nchf is described in TS 32.290 v17.3.0. 3GPP SA6 specifies a Common API Framework (CAPIF) and is described in TS 23.222 v17.5.0.

### Summary

The invention is defined by the appended claims.

Application services such as vertical services can be implemented using a wireless communications network to provide communication services. Such communication services may be provided between a wireless communications device (such as a UE) and a server (which may serve an application service). However, the cost of using a wireless communications network and its features and/or capabilities for implementing such services may be governed by service agreements between a plurality of parties. The number of parties and agreements and also the presence of charges conditional upon factors such as network status result in complex cost calculations. Such complex cost calculations can make it difficult to determine the expected cost of delivering an application service over a wireless communications network.

Disclosed herein are procedures for charging an application service provider coupled to a wireless communications network. Said procedures may be implemented by a configuration function for charging an application service provider coupled to a wireless communications network.

There is provided a configuration function for charging an application service provider coupled to a wireless communications network, the wireless communications network arranged to enable communication for one or more application services of the application service provider. The configuration function comprises a receiver and a processor. The receiver is arranged to receive a subscription for charging notifications in respect of one or more application services of the application service provider. The processor is arranged to derive charging analytics for the one or more application services from recorded data, the charging analytics including a prediction of the charging of the application service provider for use of the wireless communications network in a service area, by the one or more application services of the application service provider. The processor is further arranged to determine an automated charging trigger configuration for charging the application service provider for use of the wireless communications network based on the derived charging analytics.

The subscription for charging notifications in respect of application services of the application service provider may be received from at least one of the application service provider and the operator of the wireless communications network.

The recorded data may be at least one of: historical charging data for the application service; data related to the prior utilization of the wireless communications network by the application service for a given area and time of the day; the current load on the network; or the current load on the application for a given area and time of the day.

The processor may be further arranged to perform a translation between data related to the use of the wireless communication network by the one or more applications of the application service provider and the data used for deriving the charging analytics for the one or more application services.

The configuration function resides at at least one of an external data network an edge data network, an application server, an edge application server, and the Operation Administration and Maintenance, OAM, system.

The processor may be further arranged to detect a charging trigger event, the detection based on the automated charging trigger configuration, and upon detecting the charging trigger event, the processor may be further arranged to carry out a charging trigger action for the application service provider.

The configuration function may further comprise a transmitter. The transmitter may be arranged to request service agreements for the application service provider from nodes within the wireless communications network. The receiver may be further arranged to receive service agreements for the application service provider from nodes within the wireless communications network. The processor may determine at least one charging policy. The at least one charging policy may include the configuration of one or more of: the trained ML model for charging the application service provider, the filtering of charging data corresponding to the one or more applications of the application service provider, the frequency and/or granularity of charging of the application service provider, the time validity and area for which the charging policy applies, how much ML inference data are needed (if ML model inference is activated) for the ML-enabled charging analytics, the expected sources of the charging data (e.g. OAM, 5GC, SEAL) corresponding to the one or more applications of the application service provider..

The configuration function may comprise a transmitter arranged to send the automated charging trigger configuration to a northbound API registry. The receiver may be arranged to receive charging information from the northbound API registry.

The charging trigger action may be a notification of an expected and/or predicted charging event for the one or more applications of the application service provider.

The configuration function may be implemented as an application data analytics enablement service (ADAES), or a Charging Enablement Function (CEF).

The charging analytics derived for the one or more application services may be derived using Machine Learning or Artificial Intelligence.

There is further provided a method performed by a configuration function for charging an application service provider coupled to a wireless communications network, the wireless communications network arranged to enable communication for one or more application services of the application service provider. The method comprises receiving a subscription for charging notifications in respect of application services of the application service provider, and deriving charging analytics for the application service from recorded data, the charging analytics including a prediction of the charging of the application service provider for use of the wireless communications network in a service area, by the one or more application services of the application service provider. The method further comprises determining an automated charging trigger including an automated charging trigger configuration for charging the application service provider for use of the wireless communications network based on the derived charging analytics.

The method may further comprise detecting a charging trigger event, the detection based on the automated charging trigger configuration, and upon detecting the charging trigger event, the processor is further arranged to carry out a charging trigger action for the application service provider

The method may further comprise requesting service agreements for the application service provider from nodes within the wireless communications network; receiving service agreements for the application service provider from nodes within the wireless communications network; and determining at least one charging policy based upon the received service agreements.

The method may further comprise sending the automated charging trigger configuration to a northbound API registry; and receiving charging information from the northbound API registry.

### Brief description of the drawings

In order to describe the manner in which advantages and features of the disclosure can be obtained, a description of the disclosure is rendered by reference to certain apparatus and methods which are illustrated in the appended drawings. Each of these drawings depict only certain aspects of the disclosure and are not therefore to be considered to be limiting of its scope. The drawings may have been simplified for clarity and are not necessarily drawn to scale.

Methods and apparatus for charging an application service provider coupled to a wireless communications network will now be described, by way of example only, with reference to the accompanying drawings, in which:
Figure 1 illustrates a slice API configuration;
Figure 2 illustrates an overview of an application data analytics enablement service;

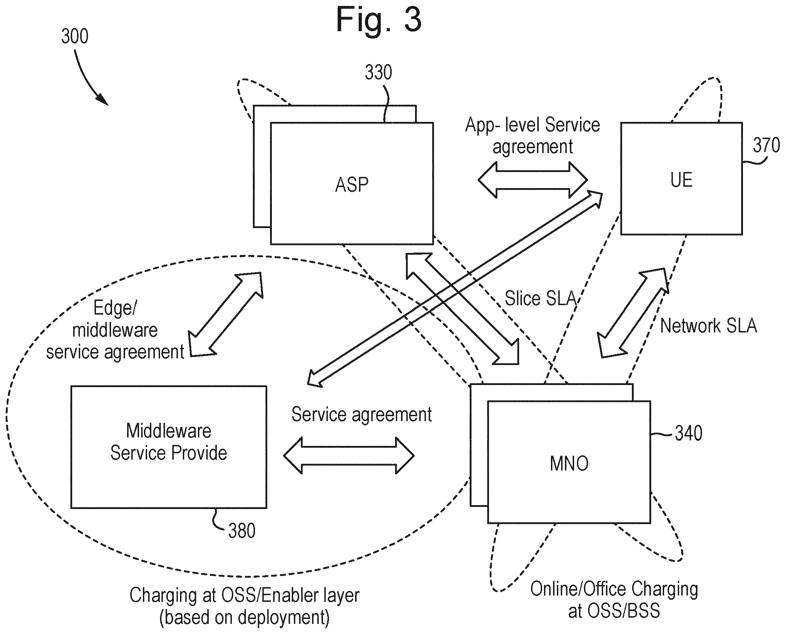

Figure 3 provides an overview of service agreements, with reference to the arrangement described herein;
Figures 4a and 4b illustrate two architectural options in charging for managing Network Slice instances;
Figure 5 illustrates a procedure for charging the invocation of service APIs between a Common API Framework (CAPIF) core function and an API exposing function;
Figure 6 depicts a user equipment apparatus;
Figure 7 depicts a configuration function that may be implemented in a network node;
Figure 8 illustrates a method performed by a configuration function for charging an application service provider coupled to a wireless communications network;
Figure 9 illustrates an exemplary system including a vertical charging configuration function (VCCF) and a vertical charging analytics service (VCAS);
Figure 10 illustrates an automated charging loop in a VCCF;
Figure 11 illustrates machine learning based charging at an application enabler layer; and
Figure 12 illustrates a system 1200 for implementing ML-based API charging using a CAPIF.

### Detailed description

As will be appreciated by one skilled in the art, aspects of this disclosure may be embodied as a system, apparatus, method, or program product. Accordingly, arrangements described herein may be implemented in an entirely hardware form, an entirely software form (including firmware, resident software, micro-code, etc.) or a form combining software and hardware aspects.

For example, the disclosed methods and apparatus may be implemented as a hardware circuit comprising custom very-large-scale integration ("VLSI") circuits or gate arrays, off-the-shelf semiconductors such as logic chips, transistors, or other discrete components. The disclosed methods and apparatus may also be implemented in programmable hardware devices such as field programmable gate arrays, programmable array logic, programmable logic devices, or the like. As another example, the disclosed methods and apparatus may include one or more physical or logical blocks of executable code which may, for instance, be organized as an object, procedure, or function.

Furthermore, methods and apparatus may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain arrangements, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store, a program for use by or in connection with an instruction execution system, apparatus, or device.

Reference throughout this specification to an example of a particular method or apparatus, or similar language, means that a particular feature, structure, or characteristic described in connection with that example is included in at least one implementation of the method and apparatus described herein. Thus, reference to features of an example of a particular method or apparatus, or similar language, may, but do not necessarily, all refer to the same example, but mean "one or more but not all examples" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics described herein may be combined in any suitable manner. In the following description, numerous specific details are provided, such as examples of programming, software modules, user selections, network transactions, database queries, database structures, hardware modules, hardware circuits, hardware chips, etc., to provide a thorough understanding of the disclosure. One skilled in the relevant art will recognize, however, that the disclosed methods and apparatus may be practiced without one or more of the specific details, or with other methods, components, materials, and so forth. In other instances, well-known structures, materials, or operations are not shown or described in detail to avoid obscuring aspects of the disclosure.

Aspects of the disclosed method and apparatus are described below with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the schematic flowchart diagrams and/or schematic block diagram.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

The description of elements in each figure may refer to elements of proceeding figures. Like numbers refer to like elements in all figures.

The present document is directed to the general problem of how to enable automated charging of a vertical customer for the provision of telecommunications services and application enabler services.

A technology enabler for efficiently integrating the IT and ICT sectors in 5G and beyond, is the use of a middleware layer which supports API exposure provided by a mobile network operator (MNO) and provides support services to abstract/simplify the MNO services to make the use of the MNO domain attractive for the vertical service providers and application developers. Such middleware can be an edge/cloud platform, or a module deployed at the edge/cloud in the premises of a vertical service provider or in the mobile network operator's (MNO) domain or at a third party provider such as an edge cloud provider.

This document addresses two use cases in particular (but not limited to only these use cases), where the charging is a complicated task, due to the multiple stakeholders involved, and where service agreements apply between many of the stakeholders.

In use case 1, the middleware provides slice APIs. Network slicing is one key 5G feature (3GPP TS 23.501 v17.2.0, TS 38.300 v16.7.0, TS 28.530 v17.0.0), which introduces logical end-to-end sub-networks corresponding to different vertical services. Network slicing allows the deployment of multiple logical networks known as Network slice instances (NSI) offering third parties and vertical service providers customized communication services (CS) on the top of a shared infrastructure. Based on a physical network that might be operated by a public operator or an enterprise, 5G provides the means to run multiple slices for different communication purposes. 5G allows those slices to run independently and if desired, isolated from each other. A network slice instance can be defined as a private or a public slice based on the scenario. A network slice instance may consist of a radio access network (RAN) part and a core network (CN) part. A sub-part of a Network Slice instance is called a network slice subnet instance (NSSI) which may then contain further NSSIs.

Slice capability exposure to verticals can be performed directly or via a middleware, application enablement layer and/or platform (defined in 3GPP TS 23.434 v17.3.0 and 3GPP TR 23.700-99 v0.4.0) which is used to simplify and abstract the 5GS capabilities. The reasons for this abstraction and/or simplification are that the slice customer and/or vertical service provider may not want to understand the specific MNO provisioned network parameters (related to service to be exposed), but requires an output which is understandable (e.g. an alert from MNO, an instruction for more resources and/or more user plane functions (UPFs)). At the same time the MNO may want to hide the network topology while providing the required information to the slice customer. Also, the application portability in different platforms requires flexibility in exposure and the enabler layer can play a role in ensuring application service continuity.

In this middleware-assisted exposure, slice APIs can be defined as customized and/or tailored sets of service APIs (which can be either NEF northbound APIs or OAM provided APIs or enabler layer and/or SEAL provided APIs) and can be mapped to particular slice instances. The slice APIs can be a bundled or combined API comprising different types of APIs, which will be used to expose the MNO (5GS and/or Service Enabler Architecture Layer (SEAL)) - provided services as needed by the applications of the slice customer. Each slice API may be configured per network slice instance. As example, a slice API is requested for an industrial internet of things (IIOT) slice. This may translate to: NSI Monitoring from Management Domain #1, NSSI Monitoring from Management Domain #2, network and/or quality of service (QoS) monitoring from network exposure function #1 (NEF#1), Location monitoring from SEAL location management server (LMS), slice-related analytics from Network Data Analytics Function (NWDAF) (via NEF).

In such a scenario, if a slice customer wants to request a new/modified service on-demand, further negotiation is needed between the MNO and the ASP to map the service to API requirement (management, control). This may require a service exposure modification which may result in either a new API or a modification of a current API. More specifically, when the application server elects to invoke an API for consuming a service related to the used (or subscribed) slice, the applications of the slice customer need to be aware of the services which are mapped to each slice, as well as the level of exposure and the termination points for the APIs. In case of a new request which requires new or modified APIs, this will imply time consuming negotiations and signaling to set and/or configure the new and/or modified services and APIs. For the APIs, this will require that the applications are compatible with the API versions, protocols, communication types etc.

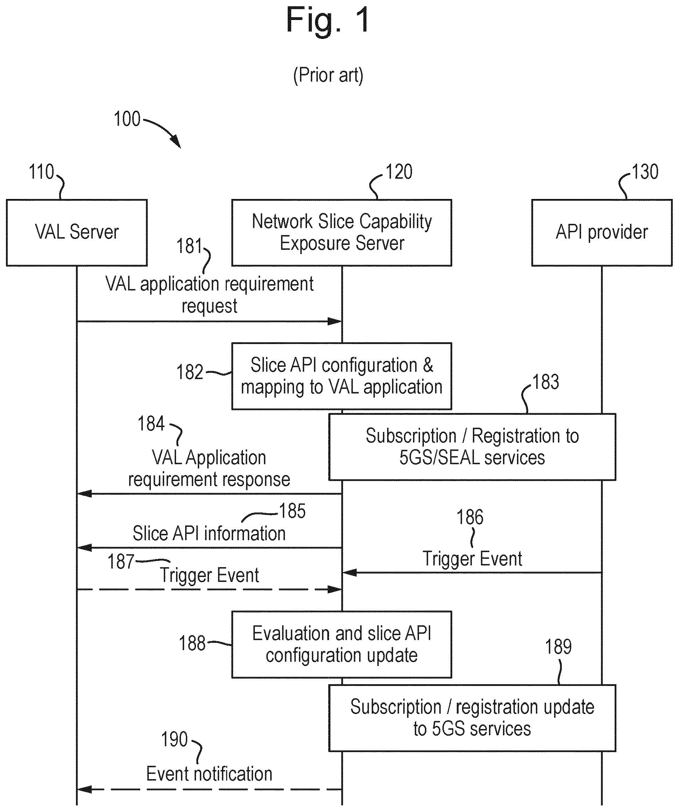

3GPP TR 23.700-99 v0.4.0 has included the procedures for slice API configuration and translation. Fig. 1 provides an overview of the slice API configuration and adaptation. As can be seen below, the Vertical Application Layer (VAL) server initially provides an application requirement to enabler server including the service KPIs and the subscribed/preferred slices. Then, the network slice capability enablement server configures the mapping of the VAL application to a slice API which is a combination/bundling of northbound APIs (from both management and control plane). In particular, a slice API (or SDK) consists of MNO-provided and/or platform dependent service APIs (e.g. NEF, OAM, SEAL, etc), and provides an abstraction and/or simplification on top of them. The procedure also covers the scenario where a trigger event occurs (e.g. QoS degradation, slice load) and the mapping configuration or the slice API configuration needs to change. In this scenario, the network slice capability enablement server updates the configuration of the API and provides a notification to the VAL server.

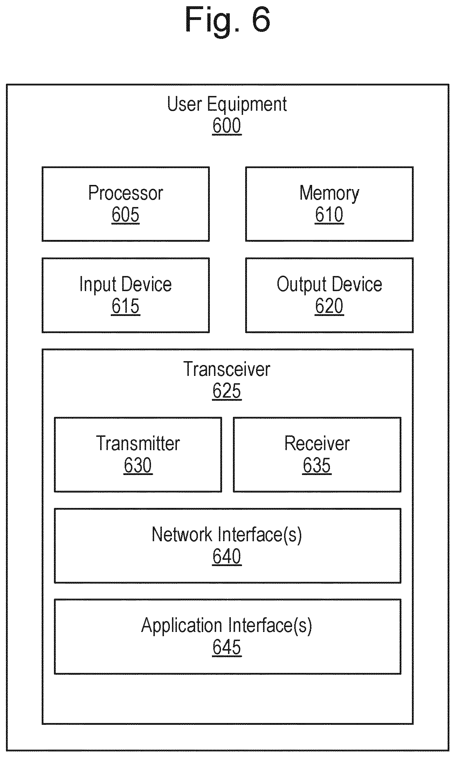

Figure 1 illustrates a slice API configuration as described in TR 23.700-99 v0.4.0, Figure 6.3.1.2-1. The slice API configuration takes place between a VAL server 110, a network slice capability exposure server 120 and an API provider 130. The API provider 130 may be, for example, a 5GS such as a control plane or a management plane, or a SEAL service.

At 181, the VAL server 110 sends a VAL application requirement request to the network slice capability enablement server 120. This request provides the service requirements / KPIs, the capability exposure requirements and a preferred/subscribed slice identification (e.g. S-NSSAI or ENSI).

At 182, the network slice capability enablement server 120 maps the VAL application requirement to a slice API which includes a list of APIs which are needed to be consumed as part of this service capability exposure. Such mapping can be determined at the network slice capability enablement server 120 based on the VAL application exposure requirements or can be pre-configured per slice instance. The criteria for the mapping are the capability exposure requirement per slice (based on GST parameters, or from service/slice profile) as well as the capability exposure permissions/authorization for the API invoker. The network slice capability enablement server 120 may also store the mapping of the slice API to the service API list and per service API information (e.g. data encoding, transport technology, API protocol and versions).

At 183, the network slice capability enablement server 120 subscribes/registers to consume the corresponding APIs from the 5GS (NEF and OAM) and SEAL service producers. For example, network slice capability enablement server 120 may subscribe to consume NEF monitoring events, or SLA monitoring from OAM.

At 184, the network slice capability enablement server 120 sends a VAL application requirement response to notify on the result of the request and indicate whether configuration of the slice API can be possible or not.

At 185, the network slice capability enablement server 120 sends the slice API information and optionally the slice to service API mapping to the VAL server 110.

At 186, a trigger event is captured by the API provider 130. The trigger event may alternatively be captured by the VAL server 110 (application server relocation to different EDN/DN, UE mobility to different EDN, application change of behavior) as illustrated in alternative step 187, or any other API related event captured by the network slice capability enablement server 120 (e.g. failure, unavailability, high load).

At 188, the network slice capability enablement server 120 processes the trigger event and checks and updates the mapping of service APIs to the slice APIs. The objective is to keep the slice APIs unchanged, so the VAL server 110 is not aware of any change (if not triggered by VAL server 110). To accomplish this, the service APIs may need to be updated accordingly. For example, if one service API changes (e.g. due to high load, unavailability, etc.) the mapping to service APIs should be updated (e.g. if service API is a Location API which is provided by 5GC in the first place, the update would trigger the remapping to a Location API from SEAL LMS) to avoid affecting the slice API.

At 189, the network slice capability enablement server 120 updates the subscription/registration to the underlying 5GS and SEAL service producers, if an update on the service APIs (e.g. NEF APIs, SEAL APIs, OAM provided APIs) is needed.

At 190, the network slice capability enablement server 120 optionally notifies the VAL server 110 on the slice/service API related updates.

In the above known scenario, a missing part is how the charging of the VAL server happens: at the time of initial slice API configuration; when a slice API to service API mapping needs to change (e.g., due to UE mobility); and when the slice API translation happens in real-time and/or online.

In use case 2, a middleware supporting Application Data Analytics Enablement is used. One expected Release 18 capability at the application enablement layer in SA6, is the application data analytics enabler service (ADAES). The functionality of the ADAES is not yet specified, however the range of value-added services being considered include: application data analytics services (stats/predictions) to optimize the application service operation by notifying the application specific layer, and potentially 5GS, for expected/predicted application service parameters changes considering both on-network and off-network deployments (e.g. related to application QoS parameters); and edge/cloud analytics (e.g. EDN load statistics/predictions) enablement and exposure to application specific layer. The functionality of the ADAES may further include supporting the coordination of data collection from different domains based on the consumer needs. Such collection can be from the 5GS via northbound APIs (NWDAF, MDAS), or from application specific layer / DN (e.g. data may be related to collecting HD maps, camera feeds, sensor data, data related to edge/cloud resources, data related to application server status (e.g. load of EAS/AS), or data from the UE side (e.g. UE routes/trajectories). So, the application data collection may be provided by different sources (e.g. vertical-specific server, application of the UE, EAS, 3rd party server, SEAL)

In this type of application enablement, it is expected to consume APIs/services related to data and/or analytics from multiple sources, and after performing additional analytics at enabler layer, to expose them via APIs which can be tailored to different vertical/ASP needs.

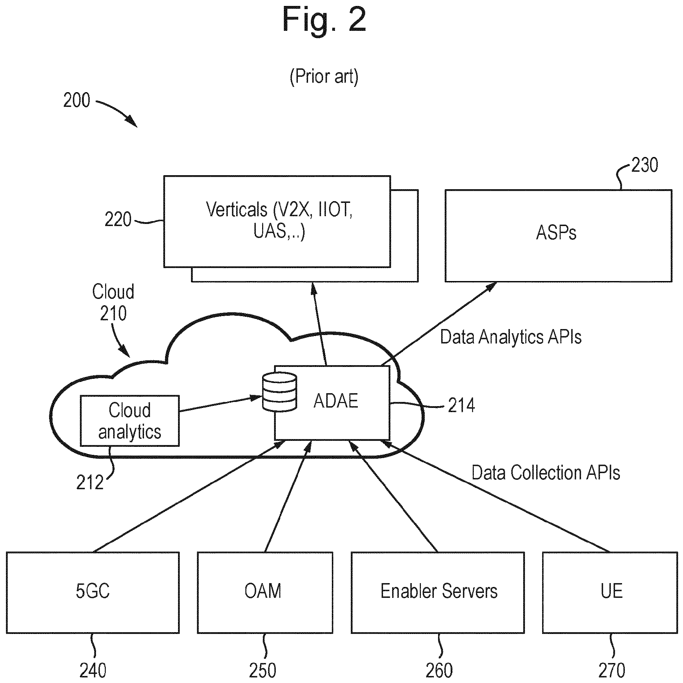

Figure 2 illustrates an overview of an App data analytics Enablement service in a system 200. The system 200 comprises a cloud 210, a plurality of vertical services 220, an application service provider 230, a 5G core 240, an Operation Administration and Maintenance (OAM) 250, an enabler server 260, and at least one user equipment (UE) 270. The role of ASP 230 may be performed instead by an Edge Application Server (EAS). The enabler server 260 may comprise a Service Enabler Architecture Layer (SEAL), V2X Application Enabler (VAE), UAS (Uncrewed Aerial System) Application Enabler (UAE). The cloud 210 comprises a cloud analytics 212 and an application data analytics enabler (ADAE) 214.

Such a mechanism requires a complicated model for charging both offline and online the vertical/ASP. In particular: MNO charges the analytics enabler for the 5GS consumed services; Edge Computing Service Providers (ECSP) charges the analytics enabler for edge data/analytics e.g. on computational resources; Device / App of the UE charges the analytics enabler for the data/analytics which are locally produced at the device side; Analytics enabler charges the vertical/ASP based on the analytics type. The charging is correlated with the charging of enabler for the data/analytics collection from the 5GS/ECSP/Device; Analytics enabler may also charge the MNO/ECSP for providing the analytics to them (if they are consumers).

Such interaction for charging can be done offline via pre-agreements between all entities, but if there is a need to do it online, the feasibility for online negotiations is an open issue. Here to mention that online charging may also be needed, due to the dynamicity of the environment, the new service requirements / API invocations that may arrive at the enabler layer, the need for additional data from different sources to meet the required confidence level for the predictions at the analytics enabler layer, the penalties if the performance is not met (or prediction is not succeeded), or when the vertical has less/more demand than requested e.g. for a slice, in a given area or time.

In both use cases 1 and 2 described above, the online and/or real time charging of the vertical applications and/or slice customer is a challenging task, since it involves the agreements between the vertical and the middleware service provider, as well as the middleware service provider and the MNO. There could be different ways of charging the services provided by the enabler layer, one of which is based on the API invocations and the service APIs which are mapped to a slice API, as well as the online charging based on the actual slice APIs calls and the processing that is needed at the enabler layer.

Figure 2 provides an overview of service agreements in a system 300. System 300 comprises at least one ASP 330, a mobile network operator (MNO) 340, at least one UE 370 and a middleware service provider 380.

The middleware service provider 380 may be an Edge Computing Service Providers (ECSP) which has an agreement with the MNO 340 for consuming 5GS provided services. At the same time the middleware service provider 380 may have an agreement with the ASP 330 for providing middleware services and for exposing slice APIs related to underlying telecommunications services to the ASP 330. Finally, the ASP 330 and MNO 340 may have an agreement for direct capability exposure. In this scenario, it is complicated to charge online the service and/or API consumption for services and/or APIs produced and consumed by different stakeholders which have some correlations. For example, middleware needs to charge the application service based on the MNO 340 charging and the processing and/or abstraction it performs on top. Such charging can be based on the API use, the confidence level or the success of the predictions related to predictive services (if such services e.g., QoS prediction, are exposed to the vertical), pre-configuration for a target area/event, or could be automated based on a smart contract or AI/ML algorithms etc.

This document presents a solution to the problem of how to efficiently charge an application service provider such as a vertical service provider for diverse and correlated services which are provided by different stakeholders and are abstracted and/or aggregated at the edge platform and/or middleware layer. Put another way, this document presents a way in which automates the vertical charging process between the different stakeholders involved.

Thus far 3GPP charging has multiple aspects based on who is being charged and for what purpose. The traditional aspect relates to charging the end user holding the UE for the call, SMS or the amount of data used from the network and holding the UE owner true to his contact. This may be referred to as SA5 charging.

A relevant aspect of SA5 charging is charging the corresponding tenant of the respective UEs. Currently there are various solutions defined in TR 32.847 v1.0.0 corresponding to the relationship between UE charging, network slice charging and corresponding tenant charging. Primarily, the relationship that is emerging is as follows:
- The "X converged charging service" is a service that collects the information appropriate for charging related to a given entity X. Here X could be a UE, a Network Slice or a Tenant. Hence you have UE-CCS, NS-CCS or Network Tenant CCS.
- Typically, the Network Tenant CCS may collect charging relevant information from the appropriate UE CCS or the NS-CCS that belong to the Tenant. However, there is no strict restriction on how this information is collected.
- THE UE CCS typically collect information from the corresponding control plane Network Function.
- The NSCCS collects information both from the UE-CCS as well as the NFs in the system.

In each case the type of information collected is specific to the charging model used.

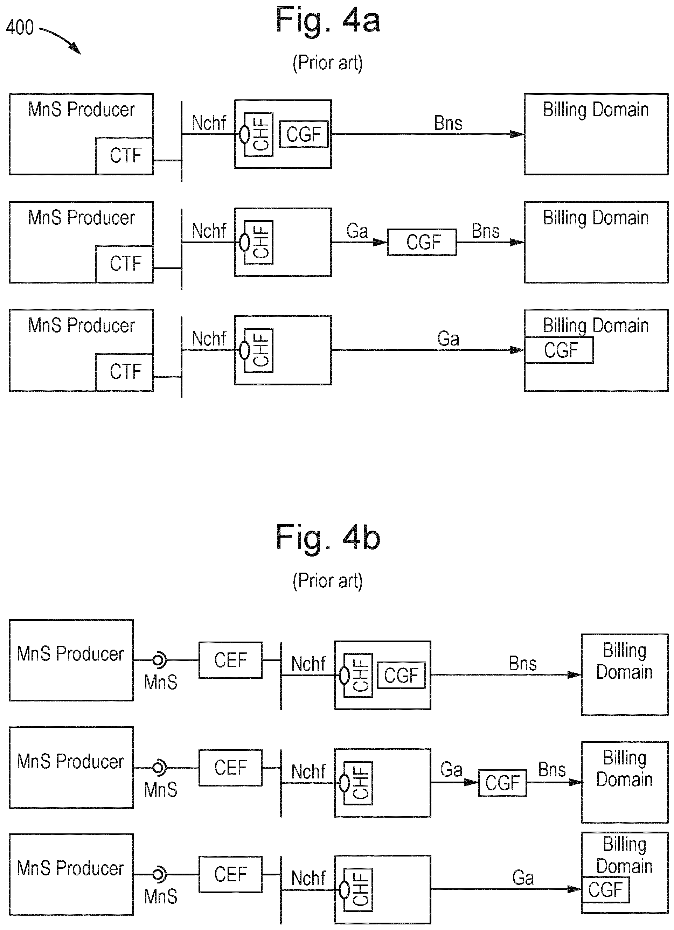

Another aspect relevant to this work is charging for managing the Network Slice instances as specified in TS 28.202 v16.1.0. The two architectural options shown in Section 4.2.2. of TS 28.202 v16.1.0 are reproduced in figures 4a and 4b. The Charging Trigger Function (CTF) is specified in TS 32.240 v17.3.0. The Charging Enablement Function (CEF) is defined in TS 28.201 v16.1.0. Charging information addressed by the CEF in the present document, are related to provisioning for network slices. The MnS producer is defined in TS 28.533 v17.0.0. The MnS producer referred to here is the producer of provisioning MnS. For network slice management converged charging the CEF is a consumer of both: provisioning service (MnS) for network slice exposed by the MnS Producer; and charging (Nchf) service. Details on the interfaces and functions can be found in TS 32.240 v17.3.0 for the general architecture components. Ga is described in clause 5.2.4 and Bns in clause 5.2.5 of TS 28.202 v16.1.0, and Nchf is described in TS 32.290 v17.3.0.

While the two options are conceptually identical, there is a difference in the impact for standardization. The essence of both options is that the MnS producer reports the relevant KPIs and other parameters, such as those relevant for classification of charging to the CHF in option 1 whereas in option 2 the CEF gather those details from the MnS producers. The current specification supports both options for charging the MnS consumer for Network Slice Instance (NSI) Creation; Network Slice Instance (NSI) Modification; and Network Slice Instance (NSI) Termination. Network Slice Instances (NSIs) are defined in TS 28.530 v17.0.0.

3GPP SA6 is specifying a Common API Framework (CAPIF) that was developed to enable a unified Northbound API framework across 3GPP network functions, and to ensure that there is a single and harmonized approach for API development, see TS 23.222 v17.5.0. Some key functionalities in CAPIF are as follows. CAPIF Core Function (CCF) is a repository of all, PLMN and 3rd party, service APIs. API Exposing Function (AEF) is the provider of the services as APIs. API Invoker is typically the applications that require service from the service providers.

In TS 23.222 v17.5.0, clause 8.20, the architectural requirements for charging the invocation of service APIs is described. The AEF can be within PLMN trust domain or within 3rd party trust domain.

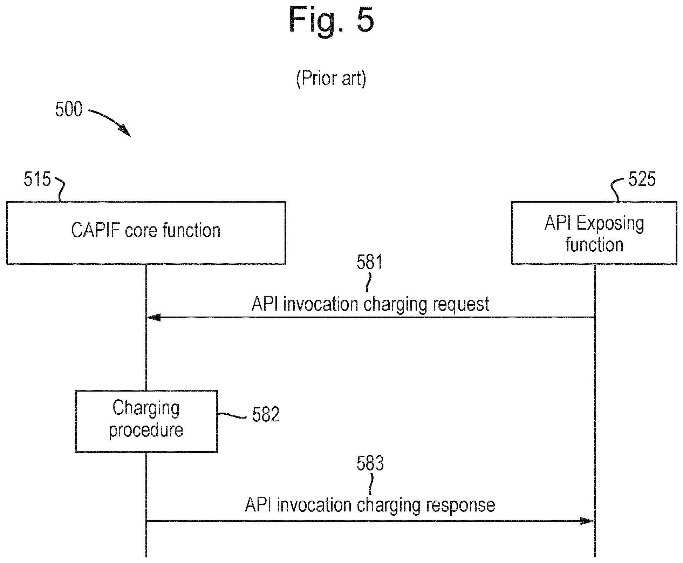

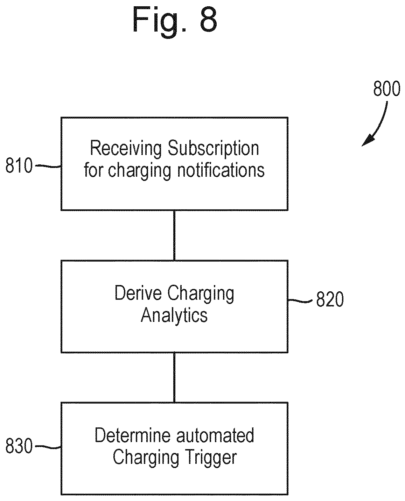

Figure 5 is a reproduction of figure 8.20.3-1 from TS 23.222 v17.5.0, and illustrates the procedure for charging the invocation of service APIs between a CAPIF core function 515 and an API exposing function (AEF) 525.

At 581, upon invocation of service API(s) from one more API invokers, the AEF 525 triggers an API invocation charging request and includes API invoker information (e.g. invoker's ID and IP address, location, timestamp) and service API information (e.g. service API name and version, invoked operation, input parameters, invocation result) towards the CAPIF core function 515. These requests can be triggered asynchronously.

At 582, the CAPIF core function 515 performs a charging procedure which includes storing the information for access by authorized API management.

At 583, the AEF 525 receives the API invocation charging response from the CAPIF core function.

Figure 6 depicts a user equipment apparatus 600 that may be used for implementing the methods described herein. The user equipment apparatus 600 is used to implement one or more of the solutions described above. The user equipment apparatus 600 includes a processor 605, a memory 610, an input device 615, an output device 620, and a transceiver 625.

The input device 615 and the output device 620 may be combined into a single device, such as a touchscreen. In some implementations, the user equipment apparatus 600 does not include any input device 615 and/or output device 620. The user equipment apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. The transceiver 625 may communicate with one or more cells (or wireless coverage areas) supported by one or more base units. The transceiver 625 may be operable on unlicensed spectrum. Moreover, the transceiver 625 may include multiple UE panels supporting one or more beams. Additionally, the transceiver 625 may support at least one network interface 640 and/or application interface 645. The application interface(s) 645 may support one or more APIs. The network interface(s) 640 may support 3GPP reference points, such as Uu, N1, PC5, etc. Other network interfaces 640 may be supported, as understood by one of ordinary skill in the art.

The processor 605 may include any known controller capable of executing computer-readable instructions and/or capable of performing logical operations. For example, the processor 605 may be a microcontroller, a microprocessor, a central processing unit ("CPU"), a graphics processing unit ("GPU"), an auxiliary processing unit, a field programmable gate array ("FPGA"), or similar programmable controller. The processor 605 may execute instructions stored in the memory 610 to perform the methods and routines described herein. The processor 605 is communicatively coupled to the memory 610, the input device 615, the output device 620, and the transceiver 625.

The processor 605 may control the user equipment apparatus 600 to implement the above-described UE behaviors. The processor 605 may include an application processor (also known as "main processor") which manages application-domain and operating system ("OS") functions and a baseband processor (also known as "baseband radio processor") which manages radio functions.

The memory 610 may be a computer readable storage medium. The memory 610 may include volatile computer storage media. For example, the memory 610 may include a RAM, including dynamic RAM ("DRAM"), synchronous dynamic RAM ("SDRAM"), and/or static RAM ("SRAM"). The memory 610 may include non-volatile computer storage media. For example, the memory 610 may include a hard disk drive, a flash memory, or any other suitable non-volatile computer storage device. The memory 610 may include both volatile and non-volatile computer storage media.

The memory 610 may store data related to implement a traffic category field as describe above. The memory 610 may also store program code and related data, such as an operating system or other controller algorithms operating on the apparatus 600.

The input device 615 may include any known computer input device including a touch panel, a button, a keyboard, a stylus, a microphone, or the like. The input device 615 may be integrated with the output device 620, for example, as a touchscreen or similar touch-sensitive display. The input device 615 may include a touchscreen such that text may be input using a virtual keyboard displayed on the touchscreen and/or by handwriting on the touchscreen. The input device 615 may include two or more different devices, such as a keyboard and a touch panel.

The output device 620 may be designed to output visual, audible, and/or haptic signals. The output device 620 may include an electronically controllable display or display device capable of outputting visual data to a user. For example, the output device 620 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 620 may include a wearable display separate from, but communicatively coupled to, the rest of the user equipment apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

The output device 620 may include one or more speakers for producing sound. For example, the output device 620 may produce an audible alert or notification (e.g., a beep or chime). The output device 620 may include one or more haptic devices for producing vibrations, motion, or other haptic feedback. All, or portions, of the output device 620 may be integrated with the input device 615. For example, the input device 615 and output device 620 may form a touchscreen or similar touch-sensitive display. The output device 620 may be located near the input device 615.

The transceiver 625 communicates with one or more network functions of a mobile communication network via one or more access networks. The transceiver 625 operates under the control of the processor 605 to transmit messages, data, and other signals and also to receive messages, data, and other signals. For example, the processor 605 may selectively activate the transceiver 625 (or portions thereof) at particular times in order to send and receive messages.

The transceiver 625 includes at least one transmitter 630 and at least one receiver 635. The one or more transmitters 630 may be used to provide UL communication signals to a base unit of a wireless communications network. Similarly, the one or more receivers 635 may be used to receive DL communication signals from the base unit. Although only one transmitter 630 and one receiver 635 are illustrated, the user equipment apparatus 600 may have any suitable number of transmitters 630 and receivers 635. Further, the transmitter(s) 630 and the receiver(s) 635 may be any suitable type of transmitters and receivers. The transceiver 625 may include a first transmitter/receiver pair used to communicate with a mobile communication network over licensed radio spectrum and a second transmitter/receiver pair used to communicate with a mobile communication network over unlicensed radio spectrum.

The first transmitter/receiver pair may be used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. The first transmitter/receiver pair and the second transmitter/receiver pair may share one or more hardware components. For example, certain transceivers 625, transmitters 630, and receivers 635 may be implemented as physically separate components that access a shared hardware resource and/or software resource, such as for example, the network interface 640.

One or more transmitters 630 and/or one or more receivers 635 may be implemented and/or integrated into a single hardware component, such as a multi-transceiver chip, a system-on-a-chip, an Application-Specific Integrated Circuit ("ASIC"), or other type of hardware component. One or more transmitters 630 and/or one or more receivers 635 may be implemented and/or integrated into a multi-chip module. Other components such as the network interface 640 or other hardware components/circuits may be integrated with any number of transmitters 630 and/or receivers 635 into a single chip. The transmitters 630 and receivers 635 may be logically configured as a transceiver 625 that uses one more common control signals or as modular transmitters 630 and receivers 635 implemented in the same hardware chip or in a multi-chip module.

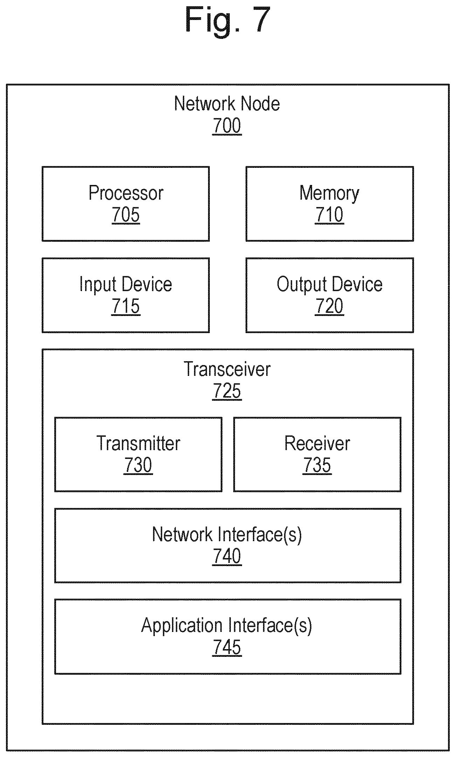

Figure 7 depicts further details of a configuration function that may be implemented in a network node 700 that may be used for implementing the methods described herein. The network node 700 may be one implementation of an entity in the wireless communications network. The network node 700 includes a controller 705, a memory 710, an input device 715, an output device 720, and a transceiver 725.

The input device 715 and the output device 720 may be combined into a single device, such as a touchscreen. In some implementations, the network node 700 does not include any input device 715 and/or output device 720. The network node 700 may include one or more of: the controller 705, the memory 710, and the transceiver 725, and may not include the input device 715 and/or the output device 720.

As depicted, the transceiver 725 includes at least one transmitter 730 and at least one receiver 735. Here, the transceiver 725 communicates with one or more remote units 200. Additionally, the transceiver 725 may support at least one network interface 740 and/or application interface 745. The application interface(s) 745 may support one or more APIs. The network interface(s) 740 may support 3GPP reference points, such as Uu, N1, N2 and N3. Other network interfaces 740 may be supported, as understood by one of ordinary skill in the art.

The controller 705 may include any known controller capable of executing computer-readable instructions and/or capable of performing logical operations. For example, the controller 705 may be a microcontroller, a microprocessor, a CPU, a GPU, an auxiliary processing unit, a FPGA, or similar programmable controller. The controller 705 may execute instructions stored in the memory 710 to perform the methods and routines described herein. The controller 705 is communicatively coupled to the memory 710, the input device 715, the output device 720, and the transceiver 725.

The memory 710 may be a computer readable storage medium. The memory 710 may include volatile computer storage media. For example, the memory 710 may include a RAM, including dynamic RAM ("DRAM"), synchronous dynamic RAM ("SDRAM"), and/or static RAM ("SRAM"). The memory 710 may include non-volatile computer storage media. For example, the memory 710 may include a hard disk drive, a flash memory, or any other suitable non-volatile computer storage device. The memory 710 may include both volatile and non-volatile computer storage media.

The memory 710 may store data related to establishing a multipath unicast link and/or mobile operation. For example, the memory 710 may store parameters, configurations, resource assignments, policies, and the like, as described above. The memory 710 may also stores program code and related data, such as an operating system or other controller algorithms operating on the network node 700.

The input device 715 may include any known computer input device including a touch panel, a button, a keyboard, a stylus, a microphone, or the like. The input device 715 may be integrated with the output device 720, for example, as a touchscreen or similar touch-sensitive display. The input device 715 may include a touchscreen such that text may be input using a virtual keyboard displayed on the touchscreen and/or by handwriting on the touchscreen. The input device 715 may include two or more different devices, such as a keyboard and a touch panel.

The output device 720 may be designed to output visual, audible, and/or haptic signals. The output device 720 may include an electronically controllable display or display device capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display separate from, but communicatively coupled to, the rest of the network node 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

The output device 720 may include one or more speakers for producing sound. For example, the output device 720 may produce an audible alert or notification (e.g., a beep or chime). The output device 720 may include one or more haptic devices for producing vibrations, motion, or other haptic feedback. All, or portions, of the output device 720 may be integrated with the input device 715. For example, the input device 715 and output device 720 may form a touchscreen or similar touch-sensitive display. The output device 720 may be located near the input device 715.

The transceiver 725 includes at least one transmitter 730 and at least one receiver 735. The one or more transmitters 730 may be used to communicate with the UE, as described herein. Similarly, the one or more receivers 735 may be used to communicate with network functions in the PLMN and/or RAN, as described herein. Although only one transmitter 730 and one receiver 735 are illustrated, the network node 700 may have any suitable number of transmitters 730 and receivers 735. Further, the transmitter(s) 730 and the receiver(s) 735 may be any suitable type of transmitters and receivers.

There is provided a configuration function for charging an application service provider coupled to a wireless communications network, the wireless communications network arranged to enable communication for one or more application services of the application service provider. The configuration function that may be implemented in a network node 700 may be arranged as follows. The network node may be a VCCF as described throughout this document. The configuration function comprises a receiver and a processor. The receiver is arranged to receive a subscription for charging notifications in respect of one or more application services of the application service provider. The processor is arranged to derive charging analytics for the one or more application services from recorded data, the charging analytics including a prediction of the charging of the application service provider for use of the wireless communications network in a service area, by the one or more application services of the application service provider. The processor is further arranged to determine an automated charging trigger configuration for charging the application service provider for use of the wireless communications network based on the derived charging analytics.

The application service provider (ASP) can be more generically a vertical service provider (e.g V2X, IIOT, eHealth vertical), an application server, an edge application server or a vertical application layer server. The wireless communications network may include a radio access network (RAN), a transport network, a core network, an edge or cloud data network, an enablement layer or middleware layer, and/or a UE. The automated charging trigger is automatically derived based on the charging analytics outputs.

Determining an automated charging trigger configuration may comprise determining an automated charging trigger including an automated charging trigger configuration. Configuration of the charging trigger is automated based on the output of the derived charging analytics and comprises an automated mapping of one or more charging trigger actions corresponding to one or more charging trigger events for the one or more applications of the application service provider. An example charging trigger event can be the expected demand to be over a threshold for a particular area and time of the day, and an example trigger action is the increase of the charging by X%. The automated charging trigger is automated in that the mapping of an event to an action is performed automatically based on the charging analytics.

The use of the wireless communications network may comprise the utilization of a user-plane (for the data transportation), the consumption of control plane services from a core network, the consumption of management services from OAM, the consumption of northbound APIs, the consumption of middleware/SEAL services, the consumption of telco-provided edge cloud services, or a combination thereof.

The subscription for charging notifications in respect of application services of the application service provider may be received from at least one of the application service provider and the operator of the wireless communications network.

The recorded data may be at least one of: historical charging data for the application service; data related to the prior utilization of the wireless communications network by the application service for a given area and time of the day; the current load on the network; or the current load on the application for a given area and time of the day.

The processor may be further arranged to perform a translation between data related to the use of the wireless communication network by the one or more applications of the application service provider and the data used for deriving the charging analytics for the one or more application services.

The configuration function resides at at least one of an external data network, an edge data network, an application server, an edge application server, and the Operation Administration and Maintenance (OAM) system.

The processor may be further arranged to detect a charging trigger event, the detection based on the automated charging trigger configuration, and upon detecting the charging trigger event, the processor may be further arranged to carry out a charging trigger action for the application service provider.

The configuration function may further comprise a transmitter. The transmitter may be arranged to request service agreements for the application service provider from nodes within the wireless communications network. The receiver may be further arranged to receive service agreements for the application service provider from nodes within the wireless communications network. The processor may determine at least one charging policy. The at least one charging policy may include the configuration of one or more of: the trained ML model for charging the application service provider, the filtering of charging data corresponding to the one or more applications of the application service provider, the frequency and/or granularity of charging of the application service provider, the time validity and area for which the charging policy applies, how much ML inference data are needed (if ML model inference is activated) for the ML-enabled charging analytics, the expected sources of the charging data (e.g. OAM, 5GC, SEAL) corresponding to the one or more applications of the application service provider.

The service agreements may comprise service level agreements (SLAs) or the Service Profile (as described in TS 28. 530 v17.0.0). A service agreement or SLA is a commitment between a service provider and a client. Particular aspects of the service - quality, availability, responsibilities are agreed between the service provider and the client. There can be various agreements based on the service that is provided and who is the service provider and the client. For example, an SLA between the vertical and the MNO relates to the expected performance requirements and availability of the mobile network and/or communication services provided by the MNO. Requirements of the services are specified in terms of Key Performance Indicators (KPIs), such as throughput, latency, availability, coverage, etc.

The configuration function may comprise a transmitter arranged to send the automated charging trigger configuration to a northbound API registry. The receiver may be arranged to receive charging information from the northbound API registry.

The northbound API registry can be a CAPIF Core Function. The northbound API refers to APIs provided by one or more of a 5G core network function (e.g. NEF), an application enablement service (e.g. SEAL, NSCE server, ADAES), an OAM-provided service (or management domain service), a CAPIF entity, and an edge or cloud platform.

The charging trigger action may be a notification of an expected and/or predicted charging event for the one or more applications of the application service provider.

The online charging may be based on the actual slice APIs calls and the processing that is needed at the enabler layer.

The configuration function may be implemented as an application data analytics enabler service (ADAES), or as a Charging Enablement Function (CEF). The configuration function may be implemented as CEF.

The charging analytics derived for the one or more application services may be derived using Machine Learning or Artificial Intelligence.

Figure 8 illustrates a method 800 performed by a configuration function for charging an application service provider coupled to a wireless communications network, the wireless communications network arranged to enable communication for one or more application services of the application service provider. The method comprises receiving 810 a subscription for charging notifications in respect of application services of the application service provider, and deriving 820 charging analytics for the application service from recorded data, the charging analytics including a prediction of the charging of the application service provider for use of the wireless communications network in a service area, by the one or more application services of the application service provider. The method further comprises determining 830 an automated charging trigger including an automated charging trigger configuration for charging the application service provider for use of the wireless communications network based on the derived charging analytics.

The application service provider (ASP) can be more generically a vertical service provider (e.g V2X, IIOT, eHealth vertical), an application server, an edge application server or a vertical application layer server. The wireless communications network may include a radio access network (RAN), a transport network, a core network, an edge or cloud data network, an enablement layer or middleware layer, and/or a UE. The automated charging trigger is automatically derived based on the charging analytics outputs.

The method may further comprise detecting a charging trigger event, the detection based on the automated charging trigger configuration, and upon detecting the charging trigger event, the processor is further arranged to carry out a charging trigger action for the application service provider

The method may further comprise requesting service agreements for the application service provider from nodes within the wireless communications network; receiving service agreements for the application service provider from nodes within the wireless communications network; and determining at least one charging policy based upon the received service agreements.

The service agreements may comprise service level agreements (SLAs).

The method may further comprise sending the automated charging trigger configuration to a northbound API registry; and receiving charging information from the CAPIF core function.

The solution presented herein provides a mechanism for automating vertical charging for the applications using multiple and correlated telecommunication services and/or APIs from different domains.

The method is performed at a configuration function, which may be a charging enablement functionality, or a Vertical Charging Configuration Function (VCCF). The configuration function may co-operate with, be co-located with and/or include a vertical charging analytics service (VCAS). The VCCF and VCAS may also be separated and in different domains; however logically they can also be seen as a standalone entity (VCCF may include or utilize VCAS services as part of the ML-based charging method).

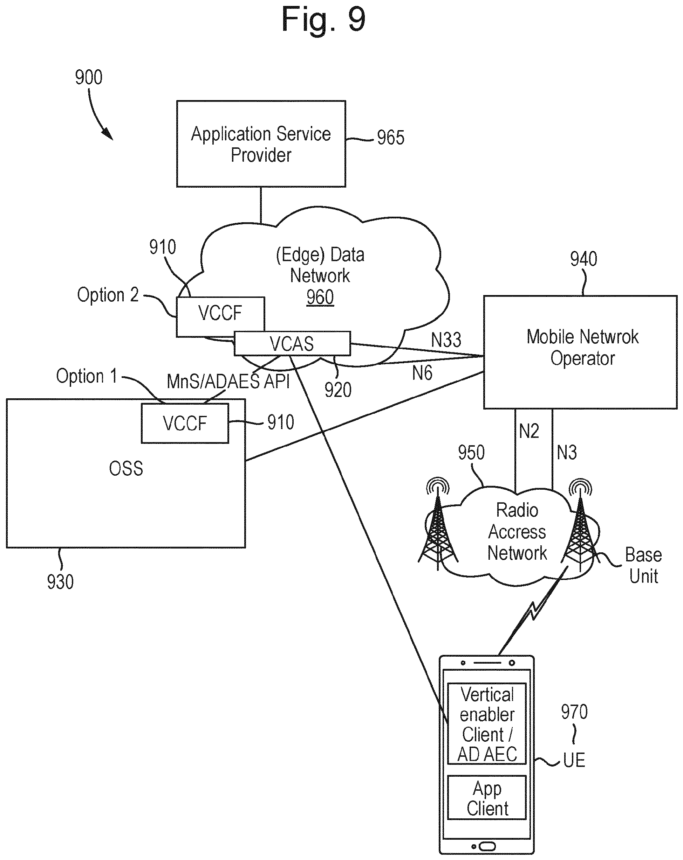

Figure 9 illustrates an exemplary system 900 including a VCCF 910, a VCAS 920, a an OSS 930, an MNO 940, a RAN 950, a data network 960 and an application service provider 965. There are two options for the placement of the VCCF: at the OSS 930 as new charging enablement functionality (labelled option 1 in Figure 9); and at the third party/vertical Data Network 920, co-located with the VCAS (labelled option 2 in figure 9). Depending on the deployment the interaction between VCCF 910 and VCAS 920 as well as the information retrieval on the service agreements from MNO 940 domain may differ.

The following steps for a configuration phase may be performed by system 900.

A consumer (application service provider 965 or MNO 940) subscribes for receiving automated charging notifications / recommendations for MNO-provided services.
- If the consumer is the MNO 940, this could be useful for MNO 940 to identify possible predicted charging trigger events considering charging data from multiple domains and use of services by the vertical for different time of the day and areas.
- If the consumer is the application service provider 965, this could be useful for the vertical to capture the possible charging for using certain services and/or APIs for a given area and time of the day.

The vertical charging configuration function (VCCF) 910 will obtain an artificial intelligence (AI) and/or machine learning (ML) model for the charging of the target vertical. Such ML model may be provided by the consumer and will include the ML algorithms to be used for the derivation of the vertical charging automated parameters.

The VCCF 910 will request and receive the SLA/service agreements for the target application service provider 965 and the users of the application service for all the MNO-provided services (for example OAM, 5GC, SEAL, MEC) from the corresponding MNO domains. Such SLA/service agreement information will mainly indicate the expected performance and availability of the target services and the charging/penalty related triggers.
- Some of these services are not going to be consumed by the application service , but the VCCF 910 will consume these to provide a value-add service on top of the 5GS. In that case, the service agreements will be also between the VCCF 910 and the MNO 940, or VCCF 910 and the application service provider 965.
- If the VCCF 910 resides at the OSS, the SLA/service agreement related to the MNO 940 domains, don't require external exposure, since this is an introduced feature as OAM. On the other hand the agreements between the application service provider 940 and other domains, e.g. middleware/edge cloud provider domain, need to be exposed from the data network 960 to the OAM.
- If the VCCF 910 resides at the data network 960 as external application enablement function, the OSS 930 needs to expose the SLA/service agreements externally, and this requires enhancements in SA5 (to expose this information via OSS 930 directly, or via BSS indirectly).
- The service agreements will also provide API related exposure levels and agreements.

The VCCF 910 will configure at least one charging policy that is shaped based on the SLA/service agreements and the different application service provider 940 profiles (based on the services that the application service provider 940 may need and the already subscribed/registered application service users).

The VCCF 910 will trigger the vertical charging analytics service (VCAS) 920 (which can be part of the VCCF 910), which collects or derives management and/or application data analytics for the charging based on historical data on the use of services and the corresponding charging (this can be filtered per application service provider 940, per area, and/or per time horizon).

The VCCF 910 and/or VCAS 920 will provide an automated set of predicted trigger events which will result in predicted charging trigger actions, based on the analytics on the application service expected demand/usage and the status/conditions/availability of the MNO-provided services, as well as the features / capabilities which are predicted to be exposed/consumed by the application service at the given area and time horizon.

The VCCF 910 may also publish the predicted charging trigger actions to the application service provider 940 (if the consumer is the application service provider 940) and/or to the MNO 940 (if the consumer is the MNO 940).

The following steps for a runtime phase may be performed by system 900.

The VCCF 910 captures an automated charging trigger event based on the VCAS 920. Such trigger event can be the expected high demand in a target area which will lead to the requirement for a feature to be activated for the application service provider 940 applications at the target area. For example, the target area may comprise real time Quality of Service (QoS) monitoring for a given high dense area for the V2X UEs of the target application service provider 940, running a traffic safety application.

The system 900 may go on to generate an automated charging trigger action based on the trigger event. For example, increase the charging by X% for the given time where the new feature is activated at the target area. This may be performed for the feature and the API exposure.

The system 900 may be further arranged to send the automated trigger action to the consumer to recommend and/or notify the expected charging trigger event.

After the completion of the automated charging update, feed the application service a charging trigger action to the charging analytics service for ML model inference.

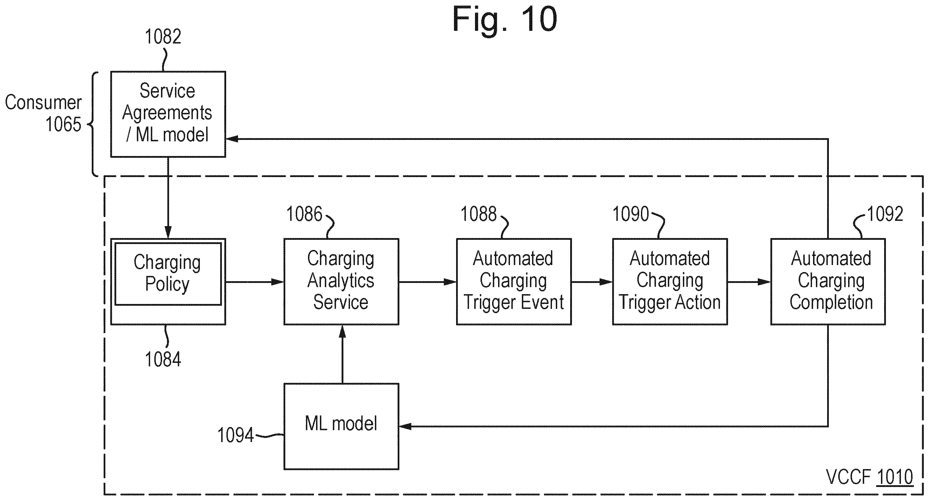

Figure 10 illustrates an automated charging loop in a VCCF 1010. At 1082, a consumer (such as the application service provider 965 or MNO 940 of figure 9) sends a service agreement and a machine learning model to a VCCF 1010. At 1084, the VCCF 1010 generates an automated charging policy 1084. At 1086 the VCCF 1010 initiates a charging analytics service, an input to the charging analytics service is a machine learning model. Another possible input to the charging analytics service is the charging policy. At 1088, the VCCF 1010 detects an automated charging trigger event. At 1090, the VCCF 1010 executes an automated charging trigger action. At 1092, the VCCF 1010 determines the automated charging is complete. The completion of an automated charging trigger action is fed back to the machine learning model at 1094. The VCAS 1150 may be embodied in an ADAES.

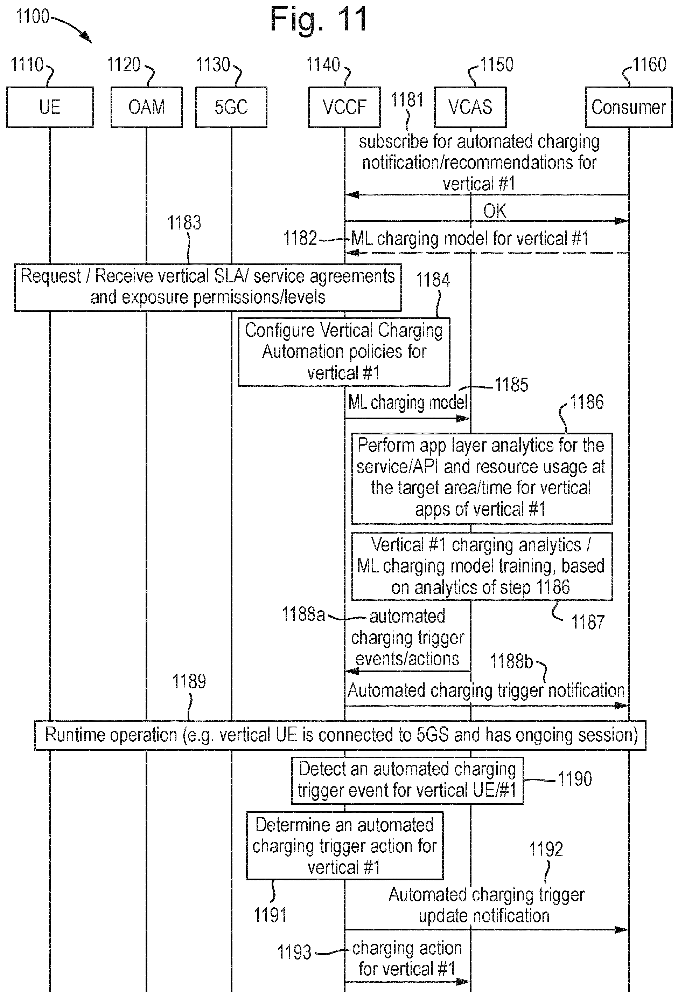

Figure 11 illustrates ML-based Charging at application enabler layer. System 1100 illustrated in figure 11 comprises a UE 1110, an OAM 1120, a 5G core 1130, a VCCF 1140, a VCAS 1150, and a consumer 1160. The consumer 1160 may comprise an application service provider or an MNO. The system of figure 11 targets an implementation of the VCCF 1140 and VCAS 1150 at an SA6-defined enablement/middleware layer which provides value-add services on top of the 5GS. Such enablement layer may be deployed by the vertical or by an edge/cloud provider or by a third party provider. In the arrangement of figure 11, the VCCF 1140 can be deployed as a middleware capability, which can be co-located or use charging analytics services from a separate function. In particular, an Application Data Analytics Service (ADAES) is being specified in SA6 and could be enhanced to provide charging analytics using ML methods.

At 1181, the consumer (a VAL server or an MNO charging function) subscribes to VCCF 1140 to get optimized automated vertical charging recommendations and/or notifications. Such subscription includes that target vertical ID, VAL application ID, PLMN ID, List of VAL UE IDs, the application service profile/type (e.g. v2x, iiot,..), the list of subscribed slices (in case of slicing), the target area and time of validity for the subscription. The VCCF authorizes the consumer and approves the subscription, and sends an ACK.

At 1182, optionally, the consumer provides to the VCCF the charging ML model for the vertical #1.

At 1183, the VCCF 1140 requests SLA information for the vertical #1 from the OAM 1120, and also may request service permissions/authorizations for vertical #1 and the already registered VAL UE IDs from other domains such as the 5GC 1130. This request may also include the exposure levels and/or permissions for the northbound APIs to be exposed to vertical #1 apps. The VCCF 1140 receives from the MNO and/or SEAL provider information for the SLA agreements as requested. This may be the service and/or slice profiles for the application service and the exposure level and/or permissions over the expected services for the application services. This report can include: the application service ID or VAL server ID or VAL application ID, the exposure level, the list of services/slices supported, the charging model for the vertical (based on the SLA). Also, it may include the offline and online charging model and historical averaged charging information to a vertical charging enabling service per offered service.

At 1184, the VCCF 1140 determines the at least one charging policy based on the charging model, the service agreements and the application type. The at least one charging policy includes the configuration of one or more of: the trained ML model for charging the application service provider, the filtering of charging data corresponding to the one or more applications of the application service provider, the frequency and/or granularity of charging of the application service provider, the time validity and area for which the charging policy applies, how much ML inference data are needed (if ML model inference is activated) for the ML-enabled charging analytics, the expected sources of the charging data (e.g. OAM, 5GC, SEAL) corresponding to the one or more applications of the application service provider.

At 1185, the VCCF 1140 discovers the VCAS 1150 (and also the ADAES, if this is not the same entity) and subscribes to it to perform the charging analytics for the vertical #1. Such request from VCCF 1140 to VCAS 1150 may include the vertical ID/ VAL application ID, the ML model and the configuration of the charging automation as in step 1184.

At 1186, the VCAS 1150 performs application layer analytics and in particular analytics for the resource/slice/service/ API utilization for one or more VAL applications/UEs of the vertical #1. This may be based on consuming MDAS/NWDAF analytics.

At 1187, the analytics from 1186 may be used as inputs (as data samples) to the application service charging ML model. Using these analytics, the VCAS 1150 predicts expected charging trigger events and the mapping to charging trigger actions based on the ML model.
- The training may happen at the consumer premises or at the OAM 1120 for the application/vertical type or profile and the area/time of validity, considering the variable charging from underlying network(s) by using the received MNO provided charging models, as well as other criteria like the success of 5GS/enabler services (e.g. QoS prediction success).
- The charging model training/inference can be based on the type of application request, the vertical application within a given area/time of the day, the type of application service requirement, the number of API invocations, the per slice API invocation request (e.g., for IIOT slice to derive an enabler layer charging model), or a combination thereof.

- For example, for the slice API #x, the enabler layer acquires the charging model and/or agreement for the service APIs from OAM and CN (e.g. SLA monitoring and Location Monitoring), estimates the charging the abstraction service on top (based on the locally deployed charging model at the enabler layer), and calculates the charging for the slice API.
- As a further example: for the analytics API request, the enabler layer acquires the charging models for using NWDAF and MDAS services as well as the charging model for collecting data from a UE application and calculates the charging for the analytics API. This is one sample that is used for ML model inference (or for training if the VCCF 1140 is part of OSS). If numerous samples are collected by the charging enabler entity (VCCF 1140 and/or VCAS 1150) based on the ML algorithm used, it provides an expected prediction of the charging for the application service.

At 1188a and 1188b, as soon as the charging ML model is trained (if training is needed), the VCAS 1150 provides the expected charging model for vertical #1, and the expected triggers and automated trigger actions based on the expected service/resource/API/slice use at a given area and time of the day. The expected charging model is also provided to the consumer as notification.

At 1189 a runtime operation begins wherein the UE is connected to the 5G system and has an ongoing session therewith.

At 1190, assuming that the UE 1110 has an ongoing session via the 5GS, the VCCF 1140 or VCAS 1150 detects that a condition for the automated charging trigger is reached (e.g. connection density or traffic load for the application at a given area), and triggers a charging trigger event for the vertical.

At 1191, the VCCF 1140, based on the trigger event, generates a vertical charging automated trigger action based on the charging ML model and event, e.g. increase charging by X% for the time duration and area, for providing more resources, otherwise the quality for VAL UE #1 will drop by Y%.

At 1192, the VCCF 1140 sends the vertical charging automated trigger action to the consumer as notification / recommendation.

At 1193, the VCCF 1140 after the completion of the charging update, sends the action to the ADAES to feed the ML model and improve the future predictions.

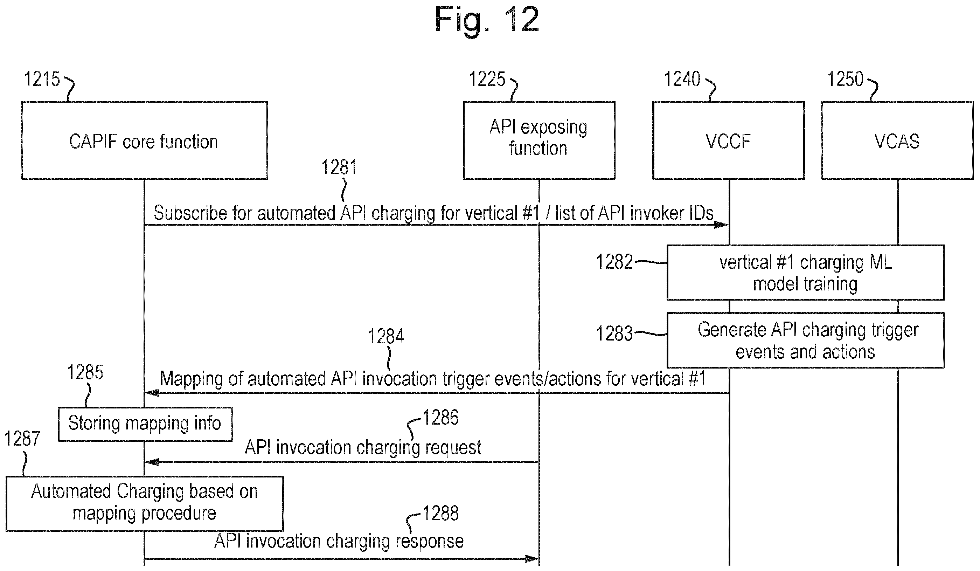

Figure 12 illustrates a system 1200 for implementing ML-based API Charging using a Common API Framework (CAPIF). The system 1200 comprises a CAPIF core function 1215, an API exposing function (AEF) 1225, a VCCF 1240, and a VCAS 1250. In implementations that use CAPIF, the CAPIF Core Function (CCF) 1215 is used for charging the invocation of service APIs. In this, the AEF 1225 (which can be within PLMN trust domain or within third party trust domain). Upon invocation of service API(s) from one more API invokers, the AEF 1225 triggers an API invocation charging request and includes API invoker information (e.g. invoker's ID and IP address, location, timestamp) and service API information (e.g. service API name and version, invoked operation, input parameters, invocation result) towards the CCF 1215.

In this embodiment, the CCF 1215 (or AEF 1225) is the consumer of the charging service provide by the VCCF 1240 and VCAS 1250. The trigger for charging API invocations is automated based on the expected API load/use/stats for the vertical #1 and the applications (API invokers) within the vertical or application service.

At 1281, the CCF 1215 subscribes to the VCCF 1240 for notifying on the automated charging triggers for a vertical #1 or for a list of API invokers (within vertical #1). VCCF 1240 approves the request and sends an ACK

At 1282, the VCCF 1240 obtains the trained ML-based vertical charging model (or performs the model training if it is deployed at OAM) for vertical #1, based on the request for one or more API invokers of vertical #1. The details are similar to embodiment #1 3-6 (but focus only on the API invocations and analytics for APIs).

At 1283, the VCCF 1240, based on the analytics on the API invocations (offline and online), generates an automated set of trigger events and charging trigger actions for vertical #1 (or for one or more API invokers / apps of vertical #1), and optionally also derives the vertical automated charging model information for the target vertical.

At 1284, the VCCF 1240 sends the mapping of the automated set of trigger events and charging trigger actions for vertical #1 (or for one or more API invokers / apps of vertical #1), and optionally also sends the vertical automated charging model information for the target vertical.

At 1285, the VCCF 1240 stores the mapping for the respective API invoker(s) based on 1284.

At 1286, upon invocation of service API(s) from one more API invokers, the AEF 1225 triggers an API invocation charging request and includes API invoker information (e.g. invoker's ID and IP address, location, timestamp) and service API information (e.g. service API name and version, invoked operation, input parameters, invocation result) towards the CCF 1215.

At 1287, the CCF 1215 performs an automated vertical charging procedure for the API invocations based on the ML charging model obtained and the trigger event/action pairs.

At 1288, the AEF 1225 receives the API invocation charging response from the CCF 1215.

The systems and methods described herein facilitate: automated charging of the vertical customer, for consuming services from different MNO domains; performing charging analytics for predicting the charging for the verticals, and in particular using ML models for deriving analytics; and configuring automated charging trigger event and/or actions based on the charging analytics, and providing the mapping to the charging functions to be aware of the action to be taken when an event is detected.

It should be noted that the above-mentioned methods and apparatus illustrate rather than limit the invention, and that those skilled in the art will be able to design many alternative arrangements without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

Further, while examples have been given in the context of particular communications standards, these examples are not intended to be the limit of the communications standards to which the disclosed method and apparatus may be applied. For example, while specific examples have been given in the context of 3GPP, the principles disclosed herein can also be applied to another wireless communications system, and indeed any communications system which uses routing rules.

The method may also be embodied in a set of instructions, stored on a computer readable medium, which when loaded into a computer processor, Digital Signal Processor (DSP) or similar, causes the processor to carry out the hereinbefore described methods.

The described methods and apparatus may be practiced in other specific forms. The described methods and apparatus are to be considered in all respects only as illustrative and not restrictive. The scope of the invention is indicated by the appended claims.

The following acronyms may be useful in understanding this document. 3GPP, 3rd Generation Partnership Project. ICT, Information Communications Technology. MNO , Mobile Network Operator. NSI, Network Slice Instance. NSSI, Network Slice Subnet Instance. CS, Communication Service. UPF, User Plane Function. OAM , Operation Administration and Maintenance. SEAL , Service Enabler Architecture Layer. NWDAF , Network Data Analytics Function. ASP , Application Service Provider. VAL, Vertical Application Layer. KPIs, Key Performance Indicators. SDK, Software Development Kit. NEF, Network Exposure Function. ADAES, Application Data Analytics Enabler Service. EDN, Edge Data Network, DN, Data Network. 5GS, 5th Generation (5G) system. MDAS, Management Domain Analytics Service. EAS, Edge Application Server. AS, Application Server. ECSP , Edge Cloud Service Provider. ML, Machine Learning. NS-CCS, Network Slice - Converged Charging Service (CCS). CHF, Charging Function. CEF, Charging Enablement Function. MnS, management service. CAPIF, Common API framework. CCF, CAPIF Core Function. AEF, API Exposing Function. VCCF, Vertical Charging Configuration Function. VCAS, Vertical Charging Analytics Service. SLA, Service Level Agreement. OSS, Operational Support System.

## Claims

1. A configuration function (700) for charging an application service provider coupled to a wireless communications network, the wireless communications network being arranged to enable communication for one or more application services of the application service provider, the configuration function (700) comprising:
a receiver (735) arranged to receive a subscription for charging notifications in respect of one or more application services of the application service provider;
a processor (705) arranged to derive charging analytics for the one or more application services from recorded data, the charging analytics including a prediction of the charging of the application service provider for use of the wireless communications network in a service area by the one or more application services of the application service provider;
the processor (705) being arranged to determine an automated charging trigger configuration for charging the application service provider for use of the wireless communications network based on the derived charging analytics;
the processor (705) being arranged to detect a charging trigger event, the detection being based on the automated charging trigger configuration; and
upon detecting the charging trigger event, the processor (705) being arranged to carry out a charging trigger action for the application service provider,
wherein the charging trigger action is a notification of at least one of an expected or predicted charging event for the one or more applications of the application service provider.

2. The configuration function (700) according to claim 1, wherein the subscription for charging notifications in respect of application services of the application service provider are received from at least one of the application service provider and an operator of the wireless communications network.

3. The configuration function (700) according to claim 1 or 2, wherein the recorded data are at least one of: historical charging data for the application service; data related to a prior utilization of the wireless communications network by the application service for a given area and time of day; the current load on the network; or a current load on the application for a given area and time of the day.

4. The configuration function (700) according to any preceding claim, wherein the processor (705) is further arranged to perform a translation between data related to the use of the wireless communication network by the one or more applications of the application service provider and the data used for deriving the charging analytics for the one or more application services.

5. The configuration function (700) according to any preceding claim, wherein the configuration function resides at one or more of an external data network, an edge data network, an application server, an edge application server, and an Operation Administration and Maintenance, OAM, system.

6. The configuration function (700) of any preceding claim, further comprising:
a transmitter arranged to request service agreements for the application service provider from nodes within the wireless communications network;
wherein the receiver is further arranged to receive service agreements for the application service provider from nodes within the wireless communications network; and
wherein the processor (705) is arranged to determine at least one charging policy.

7. The configuration function (700) of any preceding claim, further comprising:
a transmitter arranged to send the automated charging trigger configuration to a northbound API registry; and
wherein the receiver is arranged to receive charging information from the northbound API registry.

8. The configuration function (700) of any preceding claim, wherein the configuration function is implemented as an application data analytics enablement service, ADAES, or a Charging Enablement Function, CEF.

9. The configuration function (700) of any preceding claim, wherein the charging analytics derived for the one or more application services are derived using Machine Learning or Artificial Intelligence.

10. A method (800) performed by a configuration function for charging an application service provider coupled to a wireless communications network, the wireless communications network being arranged to enable communication for one or more application services of the application service provider, the method comprising:
receiving (810) a subscription for charging notifications in respect of application services of the application service provider;
deriving (820) charging analytics for the application service from recorded data, the charging analytics including a prediction of the charging of the application service provider for use of the wireless communications network in a service area, by the one or more application services of the application service provider;
determining (830) an automated charging trigger including an automated charging trigger configuration for charging the application service provider for use of the wireless communications network based on the derived charging analytics;
detecting a charging trigger event, the detection being based on the automated charging trigger configuration; and
upon detecting the charging trigger event, carrying out a charging trigger action for the application service provider,
wherein the charging trigger action is a notification of at least one of an expected or predicted charging event for the one or more applications of the application service provider.

11. The method (800) according to claim 10, further comprising:
requesting service agreements for the application service provider from nodes within the wireless communications network;
receiving service agreements for the application service provider from nodes within the wireless communications network; and
determining automated charging policies based upon the received service agreements.

12. The method (800) of claim 10 or claim 11, further comprising:
sending the automated charging trigger configuration to a northbound API registry; and
receiving charging information from the northbound API registry.

## Patentansprüche

1. Konfigurationsfunktion (700) zur Abrechnung mit einem mit einem drahtlosen Kommunikationsnetzwerk verbundenen Anwendungsdienstanbieter, wobei das drahtlose Kommunikationsnetzwerk zum Ermöglichen einer Kommunikation für einen oder mehrere Anwendungsdienste des Anwendungsdienstanbieters angeordnet ist, wobei die Konfigurationsfunktion (700) umfasst:
einen Empfänger (735), der zum Empfangen eines Abonnements für Abrechnungsbenachrichtigungen in Bezug auf einen oder mehrere Anwendungsdienste des Anwendungsdienstanbieters angeordnet ist;
einen Prozessor (705), der zum Ableiten einer Abrechnungsanalytik für den einen oder die mehreren Anwendungsdienste aus aufgezeichneten Daten angeordnet ist, wobei die Abrechnungsanalytik eine Vorhersage der Abrechnung mit dem Anwendungsdienstanbieter für die Nutzung des drahtlosen Kommunikationsnetzes in einem Versorgungsbereich durch den einen oder die mehreren Anwendungsdienste des Anwendungsdienstanbieters umfasst;
wobei der Prozessor (705) zum Bestimmen einer automatisierten Abrechnungsauslösekonfiguration für die Abrechnung mit dem Anwendungsdienstanbieter für die Nutzung des drahtlosen Kommunikationsnetzes basierend auf der abgeleiteten Abrechnungsanalytik angeordnet ist;
wobei der Prozessor (705) zum Erfassen eines Abrechnungsauslöseereignisses angeordnet ist, wobei das Erfassen auf der automatisierten Abrechnungsauslösekonfiguration basiert; und
beim Erfassen des Abrechnungsauslöseereignisses der Prozessor (705) zum Ausführen einer Abrechnungsauslöseaktion für den Anwendungsdienstanbieter angeordnet ist,
wobei die Abrechnungsauslöseaktion eine Benachrichtigung über ein erwartetes oder/und vorhergesagtes Abrechnungsereignis für die eine oder mehreren Anwendungen des Anwendungsdienstanbieters ist.

2. Konfigurationsfunktion (700) nach Anspruch 1, wobei das Abonnement für Abrechnungsbenachrichtigungen in Bezug auf Anwendungsdienste des Anwendungsdienstanbieters vom Anwendungsdienstanbieter oder/und einem Betreiber des drahtlosen Kommunikationsnetzwerks empfangen wird.

3. Konfigurationsfunktion (700) nach Anspruch 1 oder 2, wobei die aufgezeichneten Daten wenigstens ein Element sind der Gruppe umfassend historische Abrechnungsdaten für den Anwendungsdienst; Daten in Bezug auf eine vorhergehende Nutzung des drahtlosen Kommunikationsnetzwerks durch den Anwendungsdienst für einen bestimmten Bereich und eine bestimmte Tageszeit; die aktuelle Auslastung des Netzwerks; und eine aktuelle Auslastung der Anwendung für einen bestimmten Bereich und eine bestimmte Tageszeit.

4. Konfigurationsfunktion (700) nach einem der vorhergehenden Ansprüche, wobei der Prozessor (705) ferner zum Durchführen einer Übersetzung zwischen Daten in Bezug auf die Nutzung des drahtlosen Kommunikationsnetzwerks durch die eine oder mehrere Anwendungen des Anwendungsdienstanbieters und den Daten, die zum Ableiten der Abrechnungsanalytik für den einen oder die mehreren Anwendungsdienste verwendet werden, angeordnet ist.

5. Konfigurationsfunktion (700) nach einem der vorhergehenden Ansprüche, wobei die Konfigurationsfunktion in einem oder mehreren Elementen der Gruppe umfassend ein externes Datennetzwerk, ein Edge-Datennetzwerk, einen Anwendungsserver, einen Edge-Anwendungsserver und ein Operation, Administration and Maintenance System (OAM-System) angeordnet ist.

6. Konfigurationsfunktion (700) nach einem der vorhergehenden Ansprüche, ferner umfassend:
einen Sender, der zum Anfordern von Dienstvereinbarungen für den Anwendungsdienstanbieter von Knoten im drahtlosen Kommunikationsnetzwerk angeordnet ist;
wobei der Empfänger ferner zum Empfangen von Dienstvereinbarungen für den Anwendungsdienstanbieter von Knoten im drahtlosen Kommunikationsnetzwerk angeordnet ist; und
wobei der Prozessor (705) zum Bestimmen von wenigstens einer Abrechnungsrichtlinie angeordnet ist.

7. Konfigurationsfunktion (700) nach einem der vorhergehenden Ansprüche, ferner umfassend:
einen Sender, der zum Senden der automatisierten Abrechnungsauslösekonfiguration an eine Northbound-API-Registrierungsdatenbank angeordnet ist; und
wobei der Empfänger zum Empfangen von Abrechnungsinformationen von der Northbound-API-Registrierungsdatenbank angeordnet ist.

8. Konfigurationsfunktion (700) nach einem der vorhergehenden Ansprüche, wobei die Konfigurationsfunktion als ein Application Data Analytics Enablement Service (ADAES) oder eine Charging Enablement Function (CEF) implementiert ist.

9. Konfigurationsfunktion (700) nach einem der vorhergehenden Ansprüche, wobei die für den einen oder die mehreren Anwendungsdienste abgeleitete Abrechnungsanalytik mit maschinellem Lernen oder künstlicher Intelligenz abgeleitet wird.

10. Von einer Konfigurationsfunktion durchgeführtes Verfahren (800) zur Abrechnung mit einem mit einem drahtlosen Kommunikationsnetzwerk verbundenen Anwendungsdienstanbieter, wobei das drahtlose Kommunikationsnetzwerk zum Ermöglichen einer Kommunikation für einen oder mehrere Anwendungsdienste des Anwendungsdienstanbieters angeordnet ist, wobei das Verfahren umfasst:
Empfangen (810) eines Abonnements für Abrechnungsbenachrichtigungen in Bezug auf Anwendungsdienste des Anwendungsdienstanbieters;
Ableiten (820) einer Abrechnungsanalytik für den Anwendungsdienst aus aufgezeichneten Daten, wobei die Abrechnungsanalytik eine Vorhersage der Abrechnung mit dem Anwendungsdienstanbieter für die Nutzung des drahtlosen Kommunikationsnetzes in einem Versorgungsbereich, durch den einen oder die mehreren Anwendungsdienste des Anwendungsdienstanbieters umfasst;
Bestimmen (830) einer automatisierten Abrechnungsauslösekonfiguration für die Abrechnung mit dem Anwendungsdienstanbieter für die Nutzung des drahtlosen Kommunikationsnetzes basierend auf der abgeleiteten Abrechnungsanalytik;
Erfassen eines Abrechnungsauslöseereignisses, wobei das Erfassen auf der automatisierten Abrechnungsauslösekonfiguration basiert; und
beim Erfassen des Abrechnungsauslöseereignisses Ausführen einer Abrechnungsauslöseaktion für den Anwendungsdienstanbieter,
wobei die Abrechnungsauslöseaktion eine Benachrichtigung über ein erwartetes oder/und vorhergesagtes Abrechnungsereignis für die eine oder mehreren Anwendungen des Anwendungsdienstanbieters ist.

11. Verfahren (800) nach Anspruch 10, ferner umfassend:
Anfordern von Dienstvereinbarungen für den Anwendungsdienstanbieter von Knoten im drahtlosen Kommunikationsnetzwerk;
Empfangen von Dienstvereinbarungen für den Anwendungsdienstanbieter von Knoten im drahtlosen Kommunikationsnetzwerk; und
Bestimmen von automatisierten Abrechnungsrichtlinien basierend auf den empfangenen Dienstvereinbarungen.

12. Verfahren (800) nach Anspruch 10 oder 11, ferner umfassend:
Senden der automatisierten Abrechnungsauslösekonfiguration an eine Northbound-API-Registrierungsdatenbank; und
Empfangen von Abrechnungsinformationen von der Northbound-API-Registrierungsdatenbank.

## Revendications

1. Fonction de configuration (700) pour facturer un fournisseur de services d'applications couplé à un réseau de communications sans fil, le réseau de communications sans fil étant conçu pour permettre la communication pour un ou plusieurs services d'applications du fournisseur de services d'applications, la fonction de configuration (700) comprenant :
un récepteur (735) conçu pour recevoir un abonnement à des notifications de facturation concernant un ou plusieurs services d'applications du fournisseur de services d'applications ;
un processeur (705) conçu pour obtenir, à partir de données enregistrées, des données analytiques de facturation pour lesdits un ou plusieurs services d'applications, les données analytiques de facturation comprenant une prédiction de la facturation, au fournisseur de services d'applications, de l'utilisation du réseau de communications sans fil dans une zone de desserte par lesdits un ou plusieurs services d'applications du fournisseur de services d'applications ;
le processeur (705) étant conçu pour déterminer une configuration de déclenchement de facturation automatisée destinée à facturer au fournisseur de services d'applications l'utilisation du réseau de communications sans fil sur la base des données analytiques de facturation obtenues ;
le processeur (705) étant conçu pour détecter un événement déclencheur de facturation, la détection étant basée sur la configuration de déclenchement de facturation automatisée ; et
lors de la détection de l'événement déclencheur de facturation, le processeur (705) étant conçu pour exécuter une action de déclenchement de facturation pour le fournisseur de services d'applications,
dans lequel l'action de déclenchement de facturation est une notification d'un événement de facturation attendu et/ou prédit pour lesdites une ou plusieurs applications du fournisseur de services d'applications.

2. Fonction de configuration (700) selon la revendication 1, dans laquelle l'abonnement à des notifications de facturation concernant les services d'applications du fournisseur de services d'applications est reçu du fournisseur de services d'applications et/ou d'un opérateur du réseau de communications sans fil.

3. Fonction de configuration (700) selon la revendication 1 ou 2, dans laquelle les données enregistrées sont au moins l'un des éléments suivants : des données historiques de facturation pour le service d'application ; des données relatives à une utilisation antérieure du réseau de communications sans fil par le service d'application pour une zone et une heure données de la journée ; la charge actuelle du réseau ; ou une charge actuelle de l'application pour une zone et une heure données de la journée.

4. Fonction de configuration (700) selon l'une quelconque des revendications précédentes, dans laquelle le processeur (705) est en outre conçu pour effectuer une traduction entre des données relatives à l'utilisation du réseau de communications sans fil par lesdites une ou plusieurs applications du fournisseur de services d'applications et les données utilisées pour obtenir les données analytiques de facturation pour lesdits un ou plusieurs services d'applications.

5. Fonction de configuration (700) selon l'une quelconque des revendications précédentes, dans laquelle la fonction de configuration réside dans un ou plusieurs des éléments suivants : un réseau de données externe, un réseau de données en périphérie, un serveur d'applications, un serveur d'applications en périphérie et un système d'exploitation, d'administration et de maintenance (OAM).

6. Fonction de configuration (700) selon l'une quelconque des revendications précédentes, comprenant en outre :
un émetteur conçu pour demander des accords de service pour le fournisseur de services d'applications auprès de nœuds du réseau de communications sans fil ;
dans lequel le récepteur est en outre conçu pour recevoir des accords de service pour le fournisseur de services d'applications en provenance de nœuds du réseau de communications sans fil ; et
dans lequel le processeur (705) est conçu pour déterminer au moins une politique de facturation.

7. Fonction de configuration (700) selon l'une quelconque des revendications précédentes, comprenant en outre :
un émetteur conçu pour envoyer la configuration de déclenchement de facturation automatisée à un registre d'API vers les couches supérieures ; et
dans lequel le récepteur est conçu pour recevoir des informations de facturation provenant du registre d'API vers les couches supérieures.

8. Fonction de configuration (700) selon l'une quelconque des revendications précédentes, dans laquelle la fonction de configuration est mise en œuvre sous la forme d'un service d'activation d'analyse de données d'application (ADAES) ou d'une fonction d'activation de facturation (CEF).

9. Fonction de configuration (700) selon l'une quelconque des revendications précédentes, dans laquelle les données analytiques de facturation obtenues pour lesdits un ou plusieurs services d'applications sont obtenues au moyen de l'apprentissage automatique ou de l'intelligence artificielle.

10. Procédé (800) mis en œuvre par une fonction de configuration pour facturer un fournisseur de services d'applications couplé à un réseau de communications sans fil, le réseau de communications sans fil étant conçu pour permettre la communication pour un ou plusieurs services d'applications du fournisseur de services d'applications, le procédé comprenant :
la réception (810) d'un abonnement à des notifications de facturation concernant des services d'applications du fournisseur de services d'applications ;
l'obtention (820), à partir de données enregistrées, de données analytiques de facturation pour le service d'application, les données analytiques de facturation comprenant une prédiction de la facturation, au fournisseur de services d'applications, de l'utilisation du réseau de communications sans fil dans une zone de desserte par un ou plusieurs services d'applications du fournisseur de services d'applications ;
la détermination (830) d'un déclencheur de facturation automatisée comprenant une configuration de déclenchement de facturation automatisée pour facturer, au fournisseur de services d'applications, l'utilisation du réseau de communications sans fil sur la base des données analytiques de facturation obtenues ;
la détection d'un événement déclencheur de facturation, la détection étant basée sur la configuration de déclenchement de facturation automatisée ; et
lors de la détection de l'événement déclencheur de facturation, l'exécution d'une action de déclenchement de facturation pour le fournisseur de services d'applications,
dans lequel l'action de déclenchement de facturation est une notification d'un événement de facturation attendu et/ou prédit pour lesdites une ou plusieurs applications du fournisseur de services d'applications.

11. Procédé (800) selon la revendication 10, comprenant en outre :
la demande d'accords de service pour le fournisseur de services d'applications auprès de nœuds du réseau de communications sans fil ;
la réception d'accords de service pour le fournisseur de services d'applications en provenance de nœuds du réseau de communications sans fil ; et
la détermination de politiques de facturation automatisée en fonction des accords de service reçus.

12. Procédé (800) selon la revendication 10 ou la revendication 11, comprenant en outre :
l'envoi de la configuration de déclenchement de facturation automatisée à un registre d'API vers les couches supérieures ; et
la réception d'informations de facturation en provenance du registre d'API vers les couches supérieures.
